# EUROPÄISCHE PATENTSCHRIFT

(11) **EP 3 507 862 B1**
(45) Veröffentlichungstag und Bekanntmachung des Hinweises auf die Patenterteilung: **07.04.2021**
(21) Anmeldenummer: 17765084.3
(22) Anmeldetag: 04.07.2017
(51) Int. Cl.: H01Q 1/32, H01Q 1/40, H01Q 1/44, H01Q 7/08, B60R 16/02, H01R 13/405, E05B 15/16, E05B 77/36, E05B 81/54, E05B 85/16

(54) **KRAFTFAHRZEUGTÜRGRIFFANORDNUNG MIT ABGEDICHTETEM ELEKTRONIKBAURAUM**
MOTOR VEHICLE DOOR HANDLE ARRANGEMENT WITH SEALED SPACE FOR ELECTRONICS
DISPOSITIF DE POIGNÉE DE PORTE DE VÉHICULE À MOTEUR COMPRENANT UN ESPACE DE MONTAGE ÉLECTRONIQUE ÉTANCHE

(30) Priorität: 31.08.2016 DE 102016010493
(43) Veröffentlichungstag der Anmeldung: 10.07.2019
(73) Patentinhaber: Huf Hülsbeck & Fürst GmbH & Co. KG, 42551 Velbert (DE)
(72) Erfinder: KALESSE, Michael, 40885 Ratingen (DE)
(74) Vertreter: Patentanwaltskanzlei Methling
(86) Internationale Anmeldenummer: PCT/EP2017/066592
(87) Internationale Veröffentlichungsnummer: WO 2018/041441

(56) Entgegenhaltungen:
- FR-A1- 2 841 703
- US-A1- 2007 139 288
- US-A1- 2007 216 174
- US-A1- 2010 019 510
- US-B1- 6 368 152
- US-B1- 6 995 317

## Beschreibung

Die Erfindung betrifft eine Kraftfahrzeugtürgriffanordnung nach dem Oberbegriff gemäß Anspruch 1.

Derartige Kraftfahrzeugtürgriffanordnungen mit einem Handgriff zur Türbetätigung eines Kraftfahrzeuges sind bekannt. Ferner ist es bekannt, in dem Handgriff elektronische Komponenten wie beispielsweise eine Antenne, einer um die Antenne gewickelten Spule zum automatischen Aufbau einer Funkverbindung zu einem externen Identifikationsgeber und/oder Sensoren anzuordnen. Die Begriffe Wicklung und Spule werden synonym verwendet.

Aus der US 2007/216174 A1 ist ein Kraftfahrzeugtürgriff bekannt umfassend einen Griffabschnitt, einen Drehabschnitt, einen Betätigungsabschnitt, wobei der Betätigungsabschnitt einen Türöffnungsmechanismus betätigt, und eine Einfassung zur Aufnahme von elektronischen Komponenten, welche eine elektrische Kapazität detektieren und basierend darauf ein Entriegelungssignal übertragen.

Aus FR 2 841 703 A1 ist eine Anordnung zum Montieren eines elektrischen Kontaktstiftes bekannt mit einer darauf geformten Basis aus Isoliermaterial, um in einer Öffnung eines Gehäuses angeordnet zu werden, wobei die Basis ein Haltemittel aufweist.

Die Aufgabe der Erfindung ist es, eine Kraftfahrzeugtürgriffanordnung anzugeben, bei der die Herstellung und Montage vereinfacht ist.

Diese Aufgabe wird erfindungsgemäß durch eine Kraftfahrzeugtürgriffanordnung gemäß Anspruch 1 gelöst. Vorteilhafte Weiterbildungen der Erfindung sind in den Unteransprüchen angegeben.

Besonders vorteilhaft bei der Kraftfahrzeugtürgriffanordnung mit einem Handgriff, wobei der Handgriff zumindest eine Antennenkammer mit einer darin angeordneten Antenne mit einem ferromagnetischen Kern und einer um den Kern gewickelten Spule aufweist, wobei die Antenne Anschlussbereiche zur Kopplung mit Kontaktstiften zur Herstellung von elektrischen Kontakten aufweist, ist es, dass die Antennenkammer zumindest eine Ausnehmung in einer Wandung zur Durchführung elektrisch leitender Kontaktstifte aufweist, wobei ein Anschlussstück durch einmaliges oder wiederholtes Kunststoffumspritzen vorgefertigter Kontaktstifte hergestellt ist und das Anschlussstück in der Ausnehmung der Wandung der Antennenkammer die Antennenkammer abdichtend formschlüssig und/oder kraftschlüssig einliegt.

Dabei sind die Kontaktstifte einmalig oder wiederholt kunststoffumspritzt und bilden ein Anschlussstück, insbesondere kann bei einem zweiten Kunststoffumspritzen ein weicherer als Dichtung einer Antennenkammer und/oder Elektronikkammer dienender Werkstoff verwendet werden. Es können also bei mehreren Kunststoffspritzvorgängen derselbe Kunststoffwerkstoff oder unterschiedliche Kunststoffwerkstoffe mit unterschiedlichen Eigenschaften zum Einsatz kommen. Bei einem ersten Kunststoffspritzvorgang kann somit ein härterer Werkstoff zur Bildung eines stabilen Anschlussstücks zum Einsatz kommen. Diese Vorstufe kann in einem zweiten Kunststoffspritzvorgang mit einem weicheren Kunststoffwerkstoff umspritzt werden, wodurch außenseitig an dem Anschlussstück eine Dichtung ausgebildet wird. Diese Dichtung des Anschlussstückes dient insbesondere zumindest als Dichtung der Antennenkammer in dem Handgriff, in welchem die Antenne einliegt. Die Dichtungswirkung wird dadurch erzielt, dass das Anschlussstück in der Ausnehmung der Wandung der Antennenkammer die Antennenkammer abdichtend formschlüssig und/oder kraftschlüssig einliegt.

Dementsprechend sind die Kontaktstifte mit Kunststoff umspritzt und bilden ein Anschlussstück, wobei die Außenkontur des Anschlussstücks vorzugsweise eine oder mehrere Ausnehmungen und/oder Nuten und/oder Vorsprünge aufweist, die ferner als Positionierhilfe beim Einsetzen des Anschlussstücks insbesondere gemeinsam mit dem Antennenträger in die Antennenkammer des Handgriffs dienen und mit entsprechenden Gegenstücken an der Kontur der Antennenkammer zusammenwirken.

Ferner können das Anschlussstück und der Antennenträger einstückig, insbesondere materialeinheitlich ausgebildet sein. Anschlussstück und Antennenträger können somit einstückig und insbesondere materialeinheitlich durch einen ersten Kunststoffspritzvorgang hergestellt sein. Auf dieses Bauteil kann in einem zweiten Kunststoffspritzvorgang wiederum eine Dichtung aus einem insbesondere weicheren Kunststoffwerkstoff aufgespritzt sein.

Dementsprechend können die Kontaktstifte mit Kunststoff umspritzt sein und ein Anschlussstück bilden, wobei das Anschlussstück und der Antennenträger einstückig, insbesondere materialeinheitlich ausgebildet sind.

Vorzugsweise ist das Anschlussstück durch wiederholtes Kunststoffumspritzen vorgefertigter Kontaktstifte hergestellt, wobei in dem letzten Kunststoffspritzvorgang ein eine flexible Dichtung bildender Kunststoff verwendet wird.

Erfindungsgemäß weist das Anschlussstück außenseitig eine Antennenkammernut auf, die mit der Ausnehmung der Wandung der Antennenkammer einen Formschluss bildet.

Vorzugsweise weist der Handgriff eine Wanne auf, in der eine Elektronikbaugruppe mit einer Platine einliegt, wobei die Wanne zumindest eine Ausnehmung in einer Wandung zur Durchführung elektrisch leitender Kontaktstifte aufweist und wobei das Anschlussstück in der Ausnehmung der Wandung der Wanne die Wanne abdichtend formschlüssig und/oder kraftschlüssig einliegt.

Die an dem Anschlussstück angeordnete Dichtung kann somit gleichzeitig als Dichtung der Antennenkammer sowie als Dichtung einer Wanne dienen, in welcher eine Elektronikbaugruppe und insbesondere eine Platine einliegt. Dabei weist das Anschlussstück außenseitig eine Wannennut auf, die mit einer Ausnehmung der Wandung einer Wanne zur Aufnahme einer Elektronikbaugruppe einen Formschluss bildet. Ferner kann die Dimensionierung dergestalt ausgeführt sein, dass ferner eine kraftschlüssige Verbindung durch eine Klemmwirkung geschaffen wird.

Erfindungsgemäß weist das Anschlussstück außenseitig eine Antennenkammernut auf, die mit der Ausnehmung der Wandung der Antennenkammer einen Formschluss bildet, wobei das Anschlussstück außenseitig ferner eine Wannennut aufweist, die mit einer Ausnehmung der Wandung einer Wanne zur Aufnahme einer Elektronikbaugruppe einen Formschluss bildet, wobei die Antennenkammernut und die Wannennut gegenläufig angeordnet, d.h. jeweils drei Außenseiten des Anschlussstückes überspannen und in der Orientierung um 180° gedreht zueinander angeordnet sind.

Das Anschlussstück bildet somit in einem einzigen Bauteil eine Dichtung sowohl für die Antennenkammer, als auch für die Wanne. In der Antennenkammer ist die Antenne angeordnet. In der Wanne ist eine Platine angeordnet. Außenseitig weist das Anschlussstück eine Antennenkammernut auf, die das abdichtende Einsetzen des Anschlussstückes in eine Ausnehmung der Wandung der Antennenkammer ermöglicht. Ferner weist das Anschlussstück außenseitig eine Wannennut auf, die in der Orientierung um 180° gedreht das Einsetzen des Anschlussstückes in eine Ausnehmung der Wandung der Wanne ermöglicht.

Wanne und Antennenkammer können nach dem Einsetzen der Bauteile und der Dichtung jeweils mit Vergussmasse ausgegossen werden. Das Ausgießen erfolgt nacheinander. Dabei wird die gesamte Baugruppe zwischen dem ersten Vergussvorgang und dem zweiten Vergussvorgang einmal um 180° gedreht, da die Orientierung von Wanne und Antennenkammer ebenfalls um 180° versetzt ist. Durch das als Dichtung wirksame Anschlussstück wird bei den beiden Vergussvorgängen ferner das jeweilige Bauteil in dem Einbauraum fixiert und gegen ein Aufschwimmen beim Vergießen mit Vergussmasse gesichert. Dementsprechend wird die Antenne mittels des Anschlussstückes in der Antennenkammer fixiert und gegen ein Aufschwimmen beim Vergießen mit Vergussmasse gesichert. Bei dem Vergussvorgang der Wanne wird die Platine mittels des Anschlussstückes in der Antennenkammer fixiert und gegen ein Aufschwimmen beim Vergießen mit Vergussmasse gesichert.

Besonders bevorzugt ist die Dichtung des Anschlussstückes dabei derart dimensioniert, dass die Nuten des Anschlussstückes mit den Ausnehmungen in den Wandungen der Wanne sowie der Antennenkammer sowohl einen Formschluss als auch einen Reibschluss bilden.

Vorzugsweise liegt der ferromagnetische Kern formschlüssig in einem Antennenträger ein, insbesondere kann der ferromagnetische Kern in Richtung seiner Längserstreckung in eine nutenförmige oder schwalbenschwanzförmige Aufnahme eines Antennenträgers eingeschoben sein. Durch den Formschluss zwischen dem ferromagnetischen Kern und dem Antennenträger ist der ferromagnetische Kern fixiert und sicher gehalten.

Vorzugsweise nimmt der Antennenträger einen ferromagnetischen Kern auf und der ferromagnetische Kern ist in Richtung seiner Längserstreckung in eine nutenförmige oder schwalbenschwanzförmige Aufnahme des Antennenträgers eingeschoben, insbesondere gegenläufig zur Einschubrichtung eines Sensorblechs in die Aufnahme eingeschoben ist. Der Antennenträger kann dementsprechend ferner das Sensorblech eines kapazitiven Näherungssensors aufnehmen.

Mit dem Begriff des gegenläufigen Einschiebens ist dabei die Bewegungsrichtung bei der jeweiligen Montage bezeichnet. So kann der ferromagnetische Kern beispielsweise vom hinteren Ende des Antennenträgers in eine entsprechende Aufnahme des Antennenträgers für den Kern eingeschoben sein und das Sensorblech kann vom vorderen Ende des Antennenträgers in eine entsprechende Aufnahme des Antennenträgers für das Sensorblech eingeschoben sein, oder umgekehrt. Es ist jedoch auch möglich, sowohl den ferromagnetischen Kern der Antenne als auch das Sensorblech eines kapazitiven Näherungssensors in derselben Richtung in jeweilige entsprechende Aufnahmen des Antennenträgers einzuschieben.

Bevorzugt ist der ferromagnetische Kern in Richtung seiner Längserstreckung in eine nutenförmige oder schwalbenschwanzförmige Aufnahme des Antennenträgers eingeschoben. Der ferromagnetische Kern ist durch eine Quaderform gebildet, wobei die Erstreckung in Längsrichtung deutlich größer ausgebildet ist, als in den anderen beiden Dimensionen senkrecht zu seiner Längsrichtung. Mit dem Begriff des Einschiebens des Kerns in seiner Längsrichtung ist dementsprechend eine Einschubrichtung parallel zu der Längserstreckung des ferromagnetischen Kerns gemeint. Hierzu weist der Antennenträger eine im Querschnitt entsprechend konturierte Aufnahme auf. Die Montage des ferromagnetischen Kerns erfolgt somit lediglich durch ein Einschieben in diese Aufnahme des Antennenträgers. Die Aufnahme des Antennenträgers kann nutenförmig oder schwalbenschwanzförmig ausgestaltet sein.

Vorzugsweise ist der ferromagnetische Kern durch zwei Teile gebildet, insbesondere zwei in Richtung der Längserstreckung des Kerns gleichlange Teile, die hintereinander in dem Antennenträger einliegen. Der ferromagnetische Kern kann somit durch zwei oder mehrere in Längsrichtung hintereinander liegende Abschnitte gebildet sein. Insbesondere kann eine in Längsrichtung mittige Teilung des ferromagnetischen Kerns in zwei gleich lange Abschnitte erfolgen. Durch eine Teilung des ferromagnetischen Kerns in zwei oder mehrere Abschnitte wird ein Biegebereich oder es werden mehrere Biegebereiche ausgebildet. Durch einen solchen Biegebereich wird eine Beschädigung des ferromagnetischen Kerns infolge eines leichten Verformens des Handgriffs vermieden.

Vorzugsweise ist in der Antennenkammer ein Antennenträger angeordnet, wobei der Antennenträger zumindest einen Biegebereich aufweist, wobei der Biegebereich durch eine Materialausnehmung gebildet. Dabei sind die durch Materialausnehmung gebildeten Biegebereiche vorzugsweise derart positioniert, dass sie senkrecht zur Längserstreckung des ferromagnetischen Kerns mit der Trennlinie einer Teilung des Kerns in mehrere Abschnitte fluchten. Das bedeutet, dass die einen Biegebereich des Kerns bildende Unterteilung des Kerns und der Biegebereich des Antennenträgers in derselben Ebene senkrecht zur Längserstreckung des ferromagnetischen Kerns liegen. Auch die Anordnung eines solchen Biegebereiches an dem Antennenträger dient der Vermeidung von Beschädigungen infolge eines leichten Verformens des Handgriffs. Vorzugsweise ist eine Spule um den Antennenträger gewickelt, in welchem der Kern einliegt.

Vorzugsweise ist in der Antennenkammer ein Antennenträger angeordnet, der zumindest ein Sensorblech eines kapazitiven Näherungssensors aufnimmt. Dabei kann das Sensorblech eines kapazitiven Näherungssensors in dem Antennenträger formschlüssig einliegen, insbesondere in Richtung seiner Längserstreckung in eine nutenförmige oder schwalbenschwanzförmige Aufnahme des Antennenträgers eingeschoben sein, insbesondere gegenläufig zu einem in den Antennenträger eingeschobenen ferromagnetischen Kern in eine Aufnahme eingeschoben sein.

Bevorzugt ist ein Antennenträger angeordnet, wobei in dem Antennenträger zumindest ein Sensorblech eines kapazitiven Näherungssensors formschlüssig einliegt und in Richtung seiner Längserstreckung in eine nutenförmige Aufnahme des Antennenträgers eingeschoben ist, wobei das Sensorblech und/oder der Antenennträger eine Rastverbindung aufweist, in welcher das Sensorblech in einer Vormontageposition lösbar verrastet, um die Montage eines Steckers an dem Sensorblech zu ermöglichen. Nach der Montage des Steckers an dem Sensorblech kann das Sensorblech in seine Endmontageposition in dem Antennenträger geschoben werden.

Der Handgriff kann eine Antennenkammer aufweisen, in welcher zumindest der Antennenträger mit dem ferromagnetischen Kern sowie der um den Kern und/oder den Antennenträger gewickelten Spule aufgenommen wird und wobei die Antennenkammer nach dem Einsetzen des Antennenträgers mit Vergussmasse vergossen wird. Die Vergussmasse dient dem Schutz der Antenne gegen Feuchtigkeit sowie als Dämpfer gegen Vibrationen.

Die durch das Anschlussstück geführten Kontaktstifte können mit einer Platine verbunden, insbesondere verlötet sein, und die Platine kann in einer Wanne aufgenommen werden. Diese Wanne zur Aufnahme der Platine wird bevorzugt nach dem Einsetzen der Platine, insbesondere nach der Aufnahme einer mit den Kontaktstiften verbundenen und vormontierten Platine in der Wanne, mit Vergussmasse gefüllt. Die Vergussmasse dient wiederum dem Schutz der Platine gegen Feuchtigkeit sowie als Dämpfer gegen Vibrationen.

Ein Ausführungsbeispiel der beanspruchten Kraftfahrzeugtürgriffanordnung ist in den Figuren dargestellt und wird nachfolgend erläutert. Es zeigen:
- Fig. 1: den ersten Fertigungsschritt beim Umspritzen Kontaktstifte für die Antenne und den Näherungssensor;
- Fig. 2: den zweiten Fertigungsschritt mit einem weiteren Umspritzen zur Herstellung des Anschlussstückes für die Antenne und den Näherungssensor;
- Fig. 3: den Antennenträger sowie die Montage des ferromagnetischen Kerns in dem Antennenträger;
- Fig. 4: das Aufbringen der Wicklung auf den Antennenträger;
- Fig. 5: die Montage des Sensorblechs des kapazitiven Näherungssensors an dem Antennenträger;
- Fig. 6: das Aufsetzen des Anschlussstückes auf dem Sensorblech an dem Antennenträger;
- Fig. 7: das Einschieben und die Montage des Sensorblechs mit aufgesetztem Verbindungsstück in dem Antennenträger;
- Fig. 8: die Verbindung der Kontaktstifte für die Antenne und den Näherungssensor an den Lötpunkten;
- Fig. 9: eine alternative Ausgestaltung umspritzter Kontaktstifte zur Herstellung eines einstückigen Antennenträgers mit Anschlussstück;
- Fig. 10: ein zweites Kunststoffumspritzen des Antennenträgers mit Anschlussstück nach Fig. 9;
- Fig. 11: die Montage des ferromagnetischen Kerns auf den Antennenträger nach Fig. 10;
- Fig. 12: das Aufbringen einer Windung auf den Antennenträger nach Fig. 11;
- Fig. 13: die Montage eines Sensorblechs eines kapazitiven Näherungssensors an dem Antennenträger nach Fig. 12;
- Fig. 14: das Verbinden der Kontaktstifte für die Antenne und den Näherungssensor an den entsprechenden Lötpunkten des Antennenträgers nach Fig. 13;
- Fig. 15: den Umspritzvorgang von Kontaktstiften zur Herstellung des Steckers;
- Fig. 16: den zweiten Kunststoffspritzvorgang zur Herstellung des Steckers;
- Fig. 17: die Platine;
- Fig. 18: die Montage des Steckers sowie des Antennenträgers und des Blechs zur Verriegelung auf der Platine;
- Fig. 19: die Lötpunkte zum Verlöten der Kontakte mit der Platine;
- Fig. 20: das Einsetzten der Platine in die Wanne;
- Fig. 21: den Vergussprozess beim Vergießen der Wanne mit Vergussmasse;
- Fig. 22: die Montage des Elektronikmoduls in dem Handgriff und das Einsetzen der Antenne in die Antennenkammer;
- Fig. 23: den Vergussprozess beim Vergießen der Antennenkammer mit Vergussmasse;
- Fig. 24: die Montage des Pads auf der Wanne;
- Fig. 25: den Montageprozess der äußeren Griffschale auf dem Handgriff.

Anhand der nachfolgenden Figurenbeschreibung wird gleichzeitig ein Montage- und Herstellungsverfahren zur Herstellung einer solchen Kraftfahrzeugtürgriffanordnung erläutert.

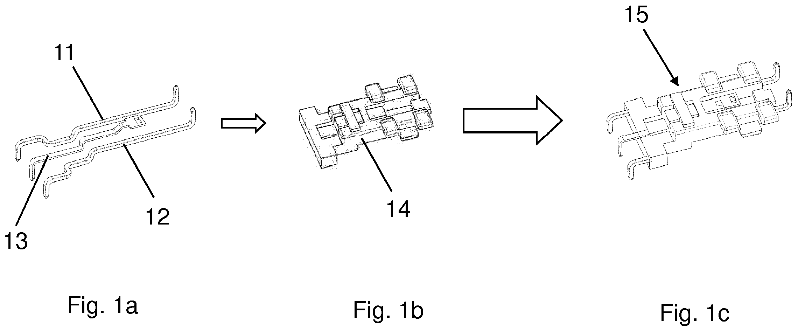

In Fig. 1a sind Kontaktstifte 11, 12, 13 dargestellt, die in einem ersten Herstellungsschritt mit Kunststoff umspritzt werden. Die Positivform 14 des ersten Kunststoffumspritzens der Kontaktstifte 11, 12, 13 ist in Fig. 1b dargestellt. Nach dem ersten Verfahrensschritt des Kunststoffumspritzens der Kontaktstifte 11, 12, 13 mit der Positivform 14 bildet sich die Vorstufe 15 des Anschlussstückes, wie sie in Fig. 1c dargestellt ist.

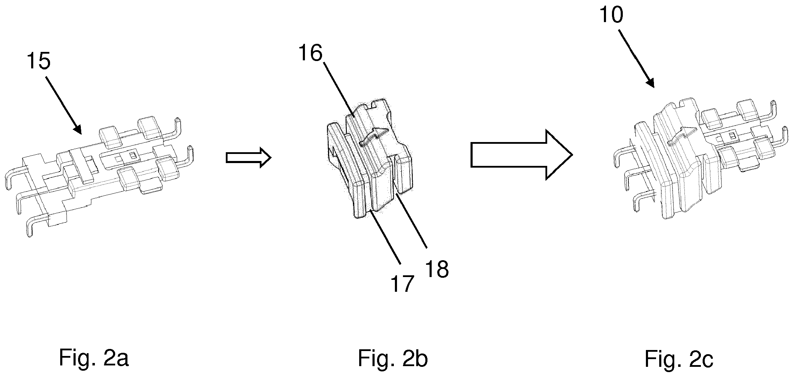

Gemäß Fig. 2 wird diese in Fig. 2a dargestellte Vorstufe 15 mit der Positivform 16 gemäß Figur 2b in einem weiteren Verfahrensschritt kunststoffumspritzt zur Ausbildung des Anschlussstücks 10 gemäß Fig. 2c. Die Positivform 16 des zweiten Kunststoffumspritzens weist außenseitig zwei jeweils drei Außenseiten überspannende Nuten 17, 18 auf. Dabei ist die Orientierung der beiden jeweils drei Außenseiten überspannenden Nuten 17, 18 gegenläufig. Diese Nuten 17, 18 bilden Dichtungsbereiche. Der äußere Abschnitt 16 bildet dabei Dichtungen, die mit Kammern, in denen elektronische Komponenten der Kraftfahrzeugtürgriffanordnung einliegen, zusammenwirken und diese Kammern abdichten. Die Montage und Funktionsweise wird weiter unten erläutert.

Die Kontaktstifte 11, 12, 13 dienen der Kopplung der Antenne sowie des Sensorblechs des kapazitiven Näherungssensors mit der Elektronik des Kraftfahrzeugtürgriffs.

In dem dargestellten Ausführungsbeispiel gemäß den Figuren 1 und 2 erfolgt das Umspritzen der Kontaktstifte 11, 12, 13 in zwei Schritten unter Verwendung unterschiedlicher Kunststoffsorten. Zur Herstellung der Vorstufe 15 gemäß Fig. 1 wird dabei ein härterer Kunststoff verwendet. Zur Herstellung des vollständigen Anschlussstücks 10 beim zweiten Kunststoffspritzvorgang mit der Positivform 16 wird ein weicherer Kunststoff verwendet, welcher geeignet ist, als Dichtungselement zu dienen und der somit eine größere Verformbarkeit aufweist, als der Kunststoff der Vorstufe 15.

In einer nicht dargestellten Alternative wird das Anschlussstück 10 unter Verwendung eines als Dichtungselement geeigneten Kunststoffes in einem einzigen Kunststoffspritzvorgang hergestellt. Dabei werden in einem einzigen Kunststoffspritzvorgang die Kontaktstifte 11, 12, 13 mit dem als Dichtung geeigneten Kunststoff umspritzt.

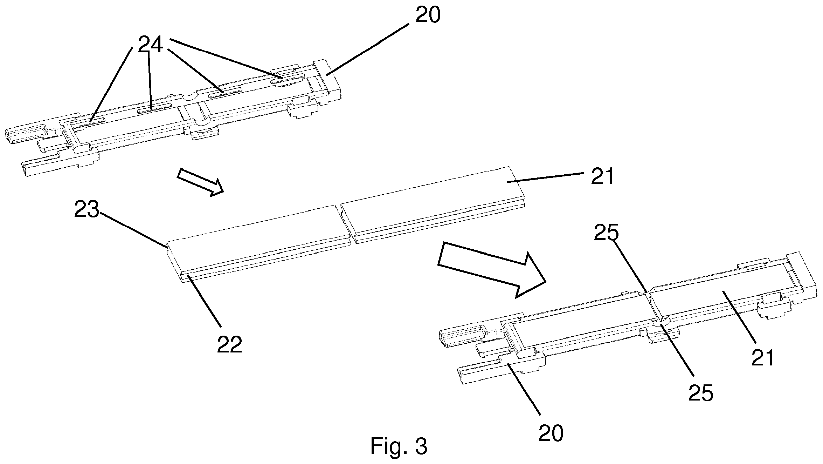

Fig. 3 zeigt den als Kunststoffspritzgussteil hergestellten Antennenträger 20, in welchen der ferromagnetische Kern 21 der Antenne eingesetzt wird. Der ferromagnetische Kern 21 liegt formschlüssig in dem Antennenträger 20 ein und wird hierzu in der Bildebene gemäß Fig. 3 von rechts in den Antennenträger 20 eingeschoben. Außenseitig weist der ferromagnetische Kern 21 Nuten 22, 23 auf, die über entsprechende Vorsprünge 24 auf der Innenseite des Antennenträgers 20 geschoben werden. Durch die in die Nuten 22, 23 des ferromagnetischen Kerns 21 eingreifenden Vorsprünge 24 des Antennenträgers 20 liegt der ferromagnetische Kern 21 formschlüssig in dem Antennenträger 20 ein.

Der ferromagnetische Kern 21 ist mittig geteilt und somit zweigeteilt ausgeführt. Der Antennenträger 20 weist Materialausnehmungen 25 auf, die mit der Teilungslinie zwischen den beiden Teilen des ferromagnetischen Kerns 21 fluchten. Durch die Materialschwächung 25 des Antennenträgers 20 und die mittige Teilung des ferromagnetischen Kerns 21 wird ein Biegebereich geschaffen der dazu dient, leichte Verformungen des Antennenträgers 20 infolge einer Betätigung des Handgriffs durch einen Benutzer zuzulassen, ohne dass dies zu einer Beschädigung des ferromagnetischen Kerns 21 führt.

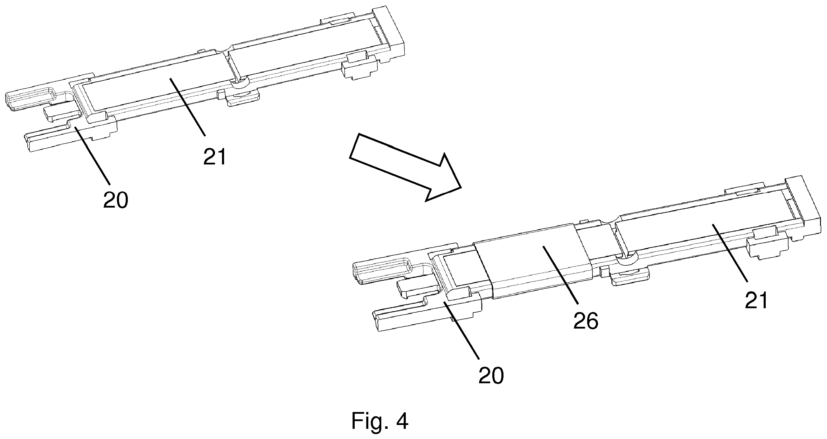

Fig. 4 zeigt das Aufbringen der Wicklung 26 auf den Antennenträger 20 und den in dem Antennenträger 20 einliegenden ferromagnetischen Kern 21.

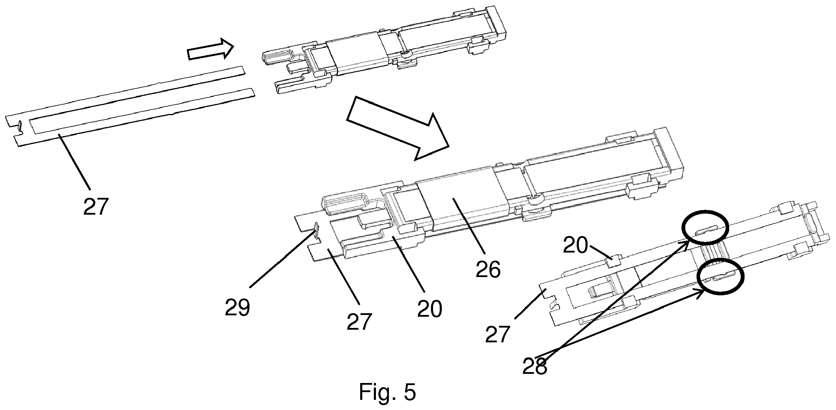

Fig. 5 zeigt die Montage des Sensorblechs 27 des kapazitiven Näherungssensors in dem Antennenträger 20. Hierzu wird das Sensorblech 27 entgegen der Einschubrichtung des ferromagnetischen Kerns 21 in eine entsprechende Aufnahme an dem Antennenträger 20 eingeschoben, wie dies in Fig. 5 dargestellt ist. Der Antennenträger 20 weist hierzu einen entsprechenden Aufnahmebereich an seiner Unterseite auf, in welcher das Sensorblech 27 nach erfolgter Montage in dem Antennenträger 20 einliegt.

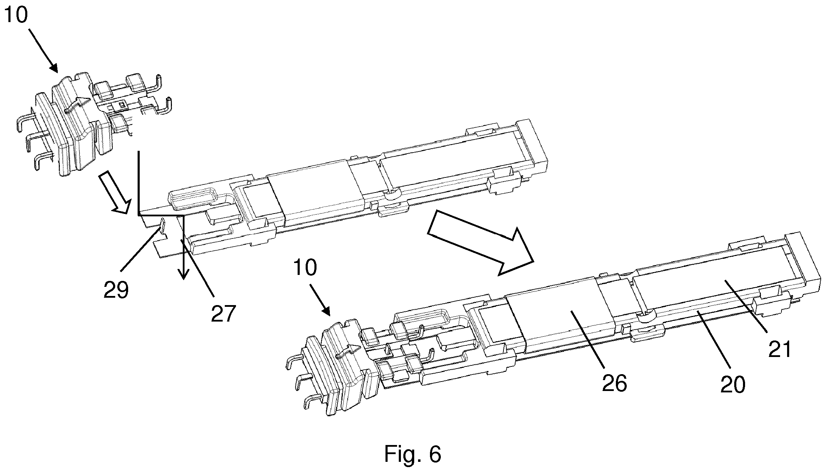

Sensorblech 27 und Antennenträger 20 weisen Rasten 28 zur Verrastung des Sensorblechs 27 an dem Antennenträger 20 in einer Vormontageposition auf. Diese Vormontageposition gemäß Fig. 5 dient der Montage des Verbindungsstückes 10, in dem die Ausnehmung an dem Sensorblechkontaktstift 13 des Verbindungsstückes 10 auf dem nach oben gebogenen Kontakt 29 des Sensorblechs 27 aufgesetzt wird wie dies in Fig. 6 dargestellt ist.

Die Rasten 28 sind in dem dargestellten Ausführungsbeispiel durch außenseitige Nasen an dem Sensorblech 27 geschaffen, die in der Vormontageposition gemäß Fig. 5 in korrespondierende Ausnehmungen in der seitlichen Führung für das Sensorblech 27 an dem Antennenträger 20 eingreifen. Da der Antennenträger 20 aus einem Kunststoffspritzgussteil gebildet und dementsprechend eine reversible Verformbarkeit aufweist, kann das Sensorblech 27 auf leichte Weise und ohne Beschädigungen an dem Sensorblech 27 oder dem Antennenträger 20 aus der Vormontageposition gemäß Fig. 5 weiter in Richtung auf seine Endposition geschoben werden. Die Rasten können auch kinematisch umgekehrt ausgebildet sein, indem Nasen an den seitlichen Führungen für das Sensorblech 27 an dem Antennenträger 20 in entsprechend positionierten Ausnehmungen an den Seitenkanten des Sensorblechs 27 in der Vormontageposition des Sensorblechs 27 eingreifen.

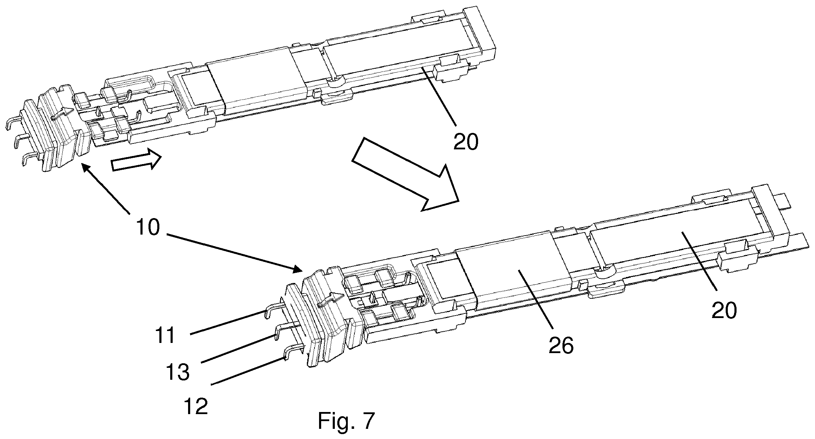

Nach dem Aufsetzen des Kontaktes 13 auf den nach oben gebogenen Kontakt 29 des Sensorblechs 27 erfolgt das Einschieben des Sensorblechs 27 mit dem darauf aufgesetzten Anschlussstück 10 in den Antennenträger 20 in seine endgültige Position gemäß der Darstellung in Fig. 7. In der endgültigen Position des Sensorblechs 27 mit dem aufgesetzten Anschlussstück 10 kommen die Antennenkontaktstifte 11, 12 mit der Antenne in Kontakt.

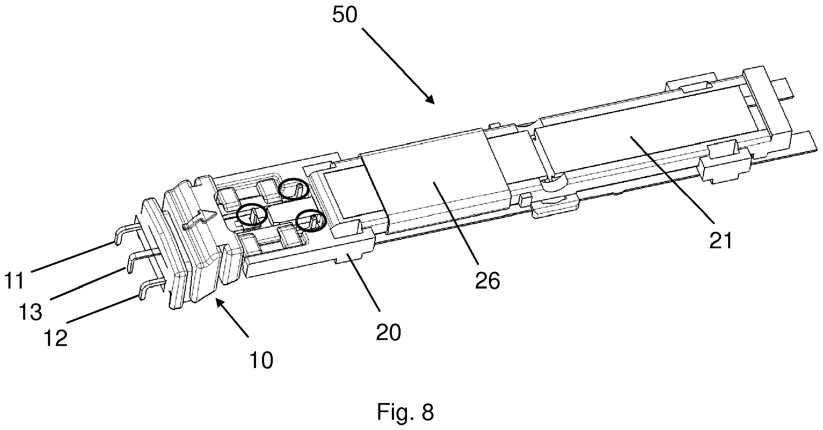

Fig. 8 zeigt eingekreist die Lötpunkte. Dementsprechend werden die Kontaktstifte 11, 12, 13 an den in Fig. 8 markierten Punkten verlötet. Hierdurch wird eine dauerhafte elektrisch leitende Verbindung zwischen den Kontaktstiften 11, 12, 13 und der Antenne sowie dem Sensorblech 27 geschaffen.

Mit dem Verlöten der Kontaktstifte 11, 12, 13 wird somit eine vormontierte Antennenbaugruppe 50 aus dem Antennenträger 20 und dem daran befestigten Anschlussstück 10 und den zuvor beschrieben weiteren Bestandteilen geschaffen.

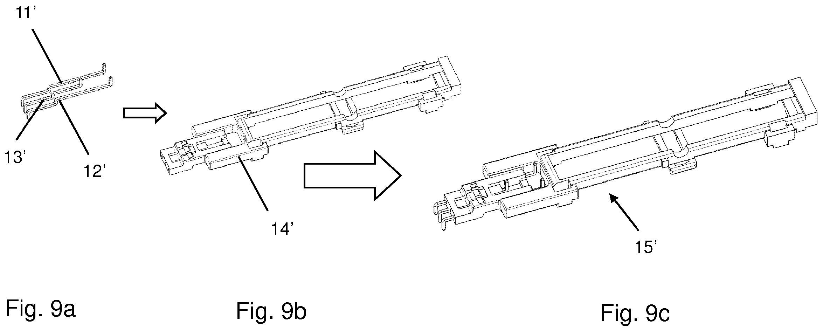

Fig. 9 zeigt eine alternative Ausgestaltung des Antennenträgers. Bei der alternativen Ausführungsform gemäß Fig. 9 werden Kontaktstifte 11', 12', 13' in einem ersten Kunststoffspritzvorgang mit der in Fig. 9 dargestellten Positivform 14' umspritzt. Dementsprechend werden bei dem Ausführungsbeispiel gemäß Fig. 9 der Antennenträger inklusive der Basis des Anschlussstückes als Vorstufe 15' einstückig und materialeinheitlich durch Kunststoffumspritzen der Kontaktstifte 11', 12', 13' hergestellt.

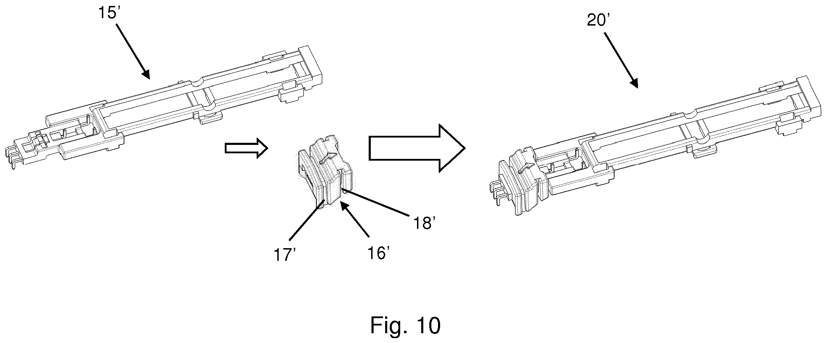

Wie in Fig. 10 dargestellt erfolgt sodann ein zweiter Umspritzvorgang mit der Positivform 16' mit einem weicheren Kunststoff, der als Dichtung geeignet ist. Es erfolgt somit die Herstellung des einstückig als Antennenträger 20' mit integriertem Anschlussstück ausgebildeten Antennenträgers 20' mit dem Dichtungselement 16', dessen geometrische Gestaltung und Funktion im Hinblick auf die außenseitig angeordneten Nuten 17', 18' der zuvor anhand der Figuren 1 bis 8 erläuterten Ausführungsform entspricht. Alternativ kann auch ein Umspritzen der Kontaktstifte 11', 12', 13' in einem einzigen Vorgang mit einem als Dichtungselement geeigneten Kunststoff erfolgen.

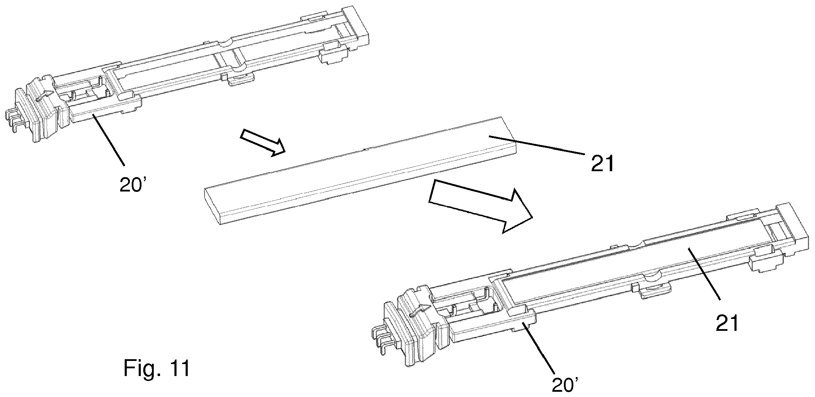

In Fig. 11 ist die Montage des ferromagnetischen Kerns 21 in dem Antennenträger 20' dargestellt.

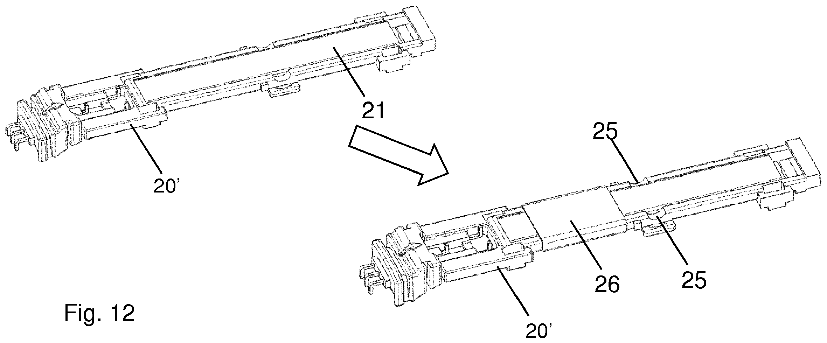

Gemäß Fig. 12 wird sodann die Wicklung 27 auf den Antennenträger 20' und dem ferromagnetischen Kern 21 aufgebracht. Der Antennenträger 20' weist wiederum Materialschwächungen 25 zur Ausbildung eines Biegebereiches auf. Der ferromagnetische Kern 21 ist ebenfalls mittig geteilt, so dass die mittige Teilung des ferromagnetischen Kerns 21 und die Ausnehmungen 25 in dem Antennenträger 20' fluchten. In einer nicht dargestellten Alternative ist der ferromagnetische Kern einstückig ausgebildet.

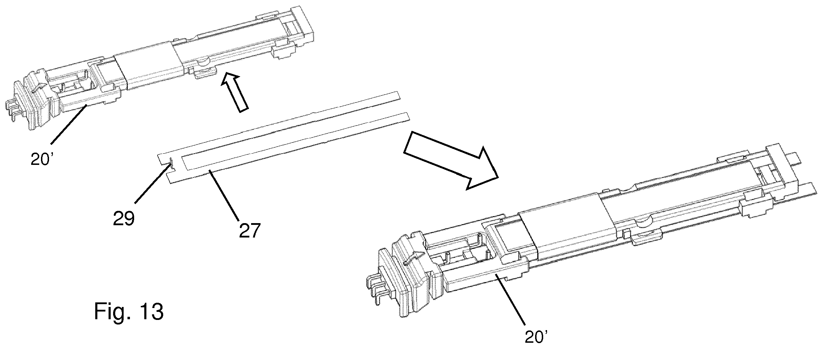

Gemäß Fig. 13 folgt sodann das Einsetzen des Sensorblechs 27 des kapazitiven Näherungssensors von unten in den Antennenträger 20'. Das Einsetzen erfolgt in diesem Fall von unten, da ein Einschieben von vorne aufgrund der einstückigen Ausbildung des Antennenträgers 20' mit dem Anschlussstück nicht möglich ist.

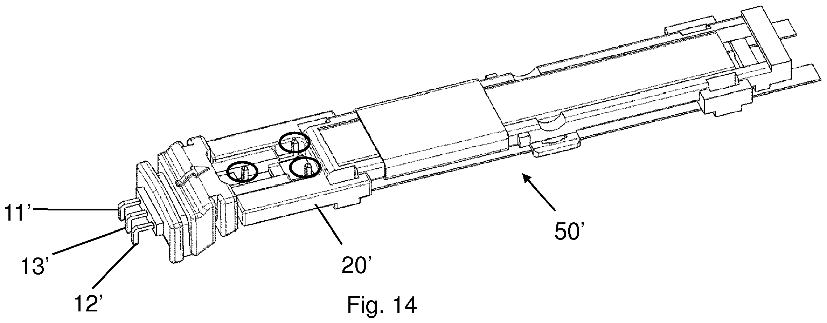

Fig. 14 zeigt wiederum die Lötpunkte zum Verlöten der Kontaktstifte 11', 12', 13' mit den entsprechenden Antennenkontakten bzw. mit dem Kontakt 29 am Sensorblech 27.

Die gemäß den Fig. 9 bis 14 hergestellte Antennenbaugruppe 50' aus Antennenträger 20' und Anschlussstück entspricht im Endergebnis der

Antennenbaugruppe 50, die gemäß den zuvor dargestellten Verfahrensschritten nach den Fig. 1 bis 8 hergestellt wurde.

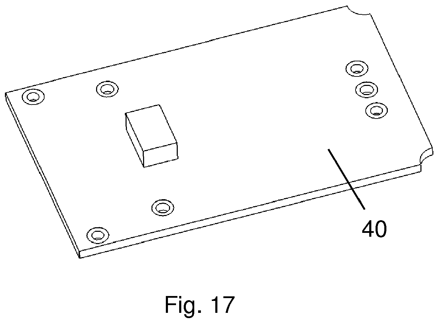

Die Antenne der Antennenträgerbaugruppe dient dabei der Fernbedienung des Schließsystems durch einen Benutzer und der Weitergabe der entsprechenden Funksignale an die Elektronik auf der Platine 40 gemäß Figur 17, wie dies nachfolgend erläutert wird. Das Sensorblech 27 des kapazitiven Näherungssensors dient dazu, dass Hintergreifen des Handgriffs durch einen Benutzer zu detektieren um die Elektronik der Kraftfahrzeugtürgriffanordnung hierdurch zu aktivieren.

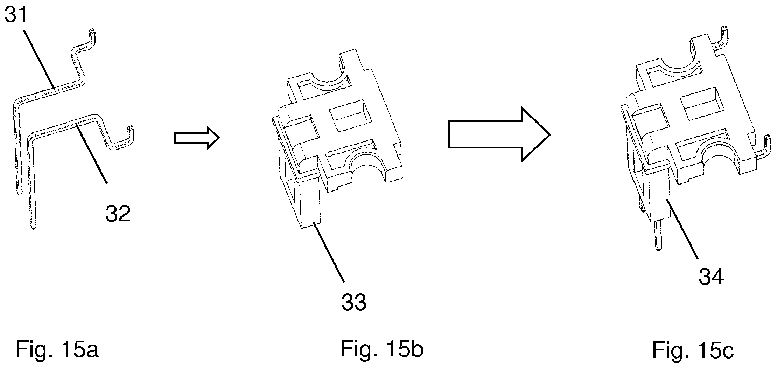

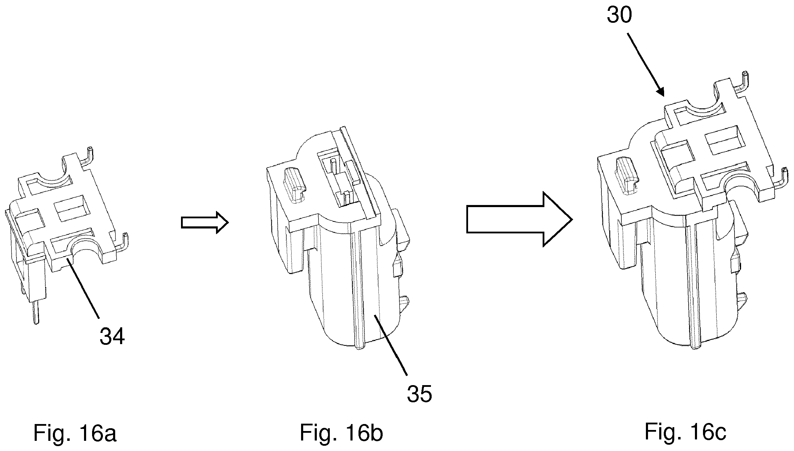

Für die Kopplung der Elektronik der Kraftfahrzeugtürgriffanordnung mit dem Kraftfahrzeug ist ein Stecker vorgesehen, dessen Herstellung anhand der Figuren 15 und 16 erläutert wird. Hierzu werden Kontaktstifte 31, 32 gemäß Fig. 15a in einem ersten Kunststoffspritzvorgang mit der Positivform 33 gemäß Fig. 15b zur Herstellung des Vorproduktes 34 gemäß Fig. 15c umspritzt. Sodann wird dieses in Fig. 16a dargestellte Vorprodukt 34 in einem weiteren Kunststoffspritzvorgang mit der Positivform 35 gemäß Fig. 16b umspritzt, um den Stecker 30 gemäß Fig. 16c herzustellen.

Bei diesem zweistufigen Kunststoffspritzvorgang gemäß den Fig. 15 und 16 kommen unterschiedliche Kunststoffe bei dem jeweiligen Spritzvorgang zum Einsatz. In einer nicht dargestellten Alternative kann der Herstellungsvorgang zur Herstellung des Steckers 30 in einem einzigen Kunststoffspritzvorgang beim Umspritzen der Kontaktstift 31, 32 erfolgen. In diesem Fall ist der Stecker einteilig und materialeinheitlich ausgeführt.

Fig. 17 zeigt die mit Elektronikbauteilen bestückte Platine 40 der Kraftfahrzeugtürgriffanordnung. Die bestückte Platine 40 dient der Verarbeitung und Weitergabe der Signale der Antenne sowie des Sensorblechs 27 und der Kopplung mit der Fahrzeugelektronik über den Stecker 30.

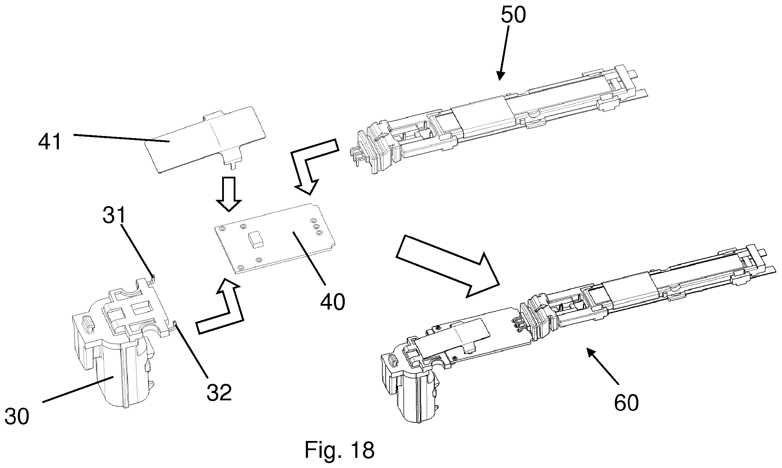

In Fig. 18 ist der Vorgang der Montage des Steckers 30 durch Einsetzten von unten in die Platine 40 sowie ferner die Montage der vormontierten Antennenbaugruppe 50 an der Platine 40 dargestellt. Der Stecker 30 wird durch Einstecken von unten in die Platine 40 in entsprechende Kontaktstellen montiert. Die Montage erfolgt durch das Einstecken der Kontaktstifte 31, 32 von unten in entsprechende Durchgangsbohrungen in der Platine 40.

Die Antennenbaugruppe 50 wird wiederum von der Oberseite her in entsprechende Ausnehmungen der Platine 40 eingesteckt. Die Montage erfolgt dabei durch das Einstecken der Kontaktstifte 11, 12, 13 der Antennenbaugruppe 50 von oben in entsprechende Durchgangsbohrungen in der Platine 40.

Hierdurch folgt die Kopplung der Kontaktstifte 31, 32 des Steckers 30 mit der Platine 40 sowie ferner die Kopplung der Kontaktstifte 11, 12, 13 der Antennenbaugruppe 50 mit der Platine 40. Des Weiteren wird von der Oberseite her ein Verriegelungsblech 41 mit Kontaktstiften auf die Platine 40 aufgesetzt und in entsprechende Aufnehmungen der Platine 40 eingesteckt. Hierdurch ergibt sich das Modul 60 aus der Antennenbaugruppe 50 mit der Antenne und der Wicklung sowie dem Anschlussstück, der Platine 40 und dem Stecker 30 wie dies in Fig. 18 dargestellt ist. Bei diesem Modul 60 bildet die Platine 40 somit ein tragendes Bauteil des Elektronikmoduls 60.

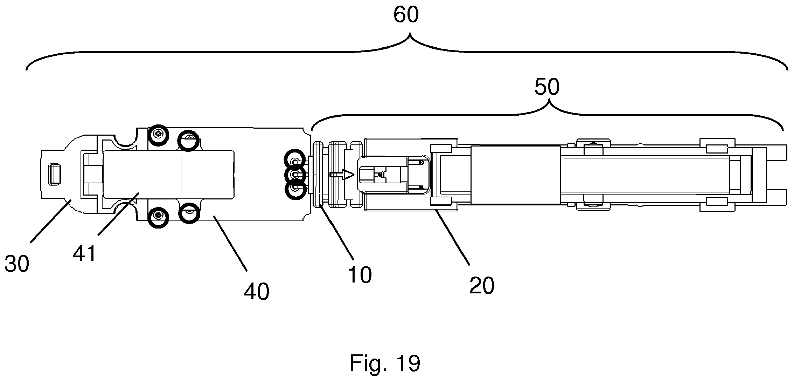

Fig. 19 zeigt die Lötpunkte zur Verbindung der Kontaktstifte 11, 12, 13, 31, 32 sowie des Blechs 41 zur Verriegelung an der Platine 40. Die Lötpunkte sind in Fig. 19 eingekreist. Das Verlöten sämtlicher Kontaktpunkte an der Platine 40 erfolgt dabei von der Oberseite der Platine 40 aus, wie dies in Fig. 19 dargestellt ist. Das bedeutet, dass das Verlöten der Kontaktstifte an der Platine 40 von derselben Seite aus erfolgt, obwohl der Stecker 30 von einer anderen Seite in die Platine 40 eingesteckt ist als die Antennenbaugruppe 50 und das Verriegelungsblech 41. Mit dem Vorgang des Verlötens der Kontaktpunkte an der Platine 40 ist somit der Herstellungsvorgang des Elektronikmoduls 60 abgeschlossen.

Das Modul 60 umfasst somit den Antennenträger 20, der die Antenne mit dem ferromagnetischen Kern und der Spule sowie das Sensorblech aufnimmt, das Anschlussstück 10, durch das elektrisch leitende Kontaktstifte von der Antenne und dem Sensorblech zu der mit Elektronikbauteilen bestückten Platine 40 geführt und mit dieser verbunden sind, wobei die Platine 40 ferner mit dem Stecker 30, der zur Herstellung der elektrischen Kontakte für die Elektronikbaugruppe des Moduls 60 dient, und wobei die Platine 40 mit elektrischen Kontaktstiften des Steckers verbunden ist. Dabei bildet die Platine 40 ein tragendes Bauteil des Moduls 60.

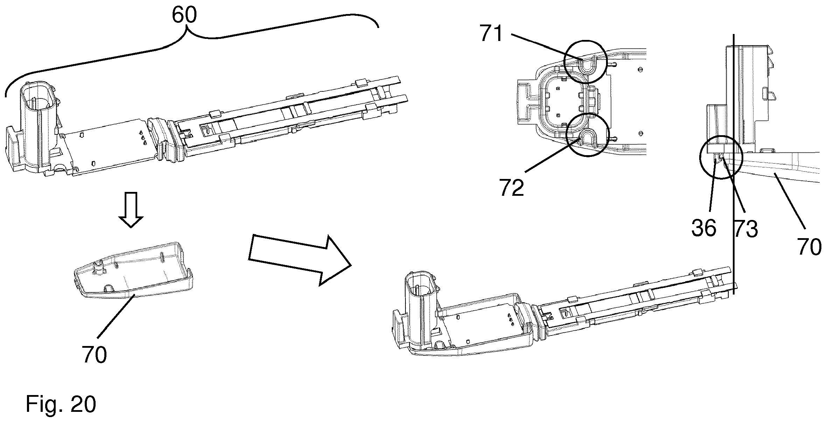

Fig. 20 zeigt die weitere Montage der vormontierten Elektronikbaugruppe in Form des Moduls 60 mit dem Einsetzten in die Wanne 70, die der Aufnahme der Platine 40 dient. Die Wanne 70 nimmt somit die Platine 40 inklusive der verlöteten Kontakte vollständig auf. Zur Positionierung der Elektronikbaugruppe 60 in der Wanne 70 weist die Wanne 70 entsprechende Positionierhilfen 71, 72 auf, die einen Formschluss mit entsprechenden Ausnehmungen an den Außenkanten der Platine 40 bilden. Die Positionierung des Moduls 60 erfolgt somit durch die Positionierhilfen 71, 72 an der Wanne 70, die einen Formschluss mit entsprechenden Gegenstücken an der Platine 40 bilden. Die Fixierung der gesamten Anordnung erfolgt dadurch, dass eine Nase 73 an der Wanne 70 eine Hinterschneidung 36 an dem Stecker 30 hintergreift. Durch dieses Einclipsen gemäß Fig. 20 erfolgt die Fixierung der Wanne 70 an dem Stecker 30. Dargestellt sind diese Positionierhilfen 71, 72 und die Nase 73 an der Wanne 70 sowie die Hinterschneidung 36 an dem Stecker 30 in den vergrößerten Detaildarstellungen gemäß Fig. 20.

In dem dargestellten Ausführungsbeispiel sind die einen Formschluss bildenden Positionierhilfen 71, 72 durch innenseitige Ausbuchtungen an der Wanne 70 gebildet, die in Ausnehmungen an den Außenkanten der Platine 40 eingreifen. Es ist auch eine umgekehrte Ausgestaltung möglich, bei der eine oder mehrere Nasen oder Vorspünge an den Außenkanten der Platine in korrespondierende Ausnehmungen der Wanne eingreifen und hierdurch einen als Positionier- und Montagehilfe dienenden Formschluss herstellen.

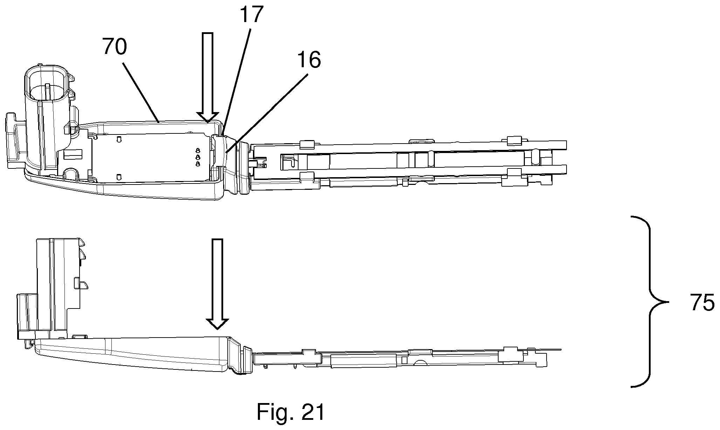

In Fig. 21 ist der Vergussprozess der Wanne 70 mit der darin einliegenden Platine 40 dargestellt. In diesem Vergussprozess wird die Wanne 70 mit der darin einliegenden Platine 40 mit aushärtender Vergussmasse vergossen. Diese Vergussmasse dient dem Schutz der Elektronikkomponenten der Platine 40 in der Wanne 70 und bildet sowohl einen Schutz gegen Feuchtigkeit als auch gleichzeitig ein Dämpfungselement gegen Vibrationen.

Die Abdichtung der Wanne 70 erfolgt mittels der Dichtung 16. Die Wanne 70 weist eine Ausnehmung auf, in der die Dichtung 16 mit der Nut 17 formschlüssig und kraftschlüssig einliegt. Die Wandung der Wanne 70 liegt in der Nut 17 der Dichtung 16 formschlüssig ein. Gleichzeitig wird eine Klemmwirkung zwischen der Wandung der Wanne 70 und der Dichtung 16 erzeugt. Zu diesem Zweck ist die Dichtung 16 aus einem als Dichtung geeigneten reversibel verformbaren Kunststoff ausgebildet. Die Wannennut 17 der Dichtung 16 und die Ausnehmung der Wanne 70 sind dementsprechend aufeinander abgestimmt. Die Wannennut 17 bildet damit gleichzeitig eine Positionierhilfe beim Einsetzen der Platine 40 des Elektronikmoduls 60 in die Wanne 70. Durch die Klemmwirkung der Dichtung 16 in der Ausnehmung der Wandung der Wanne 70 wird die Platine 40 gleichzeitig gegen ein Aufschwimmen während des Vergussprozesses gesichert und fixiert. Die Vergussmasse härtet nach dem Vergussprozess aus. Die Vergussmasse bildet einen Schutz der Platine 40 und der verlöteten Kontakte gegen Feuchtigkeit. Ferner dient die Vergussmasse als Dämpfer gegen Vibrationen.

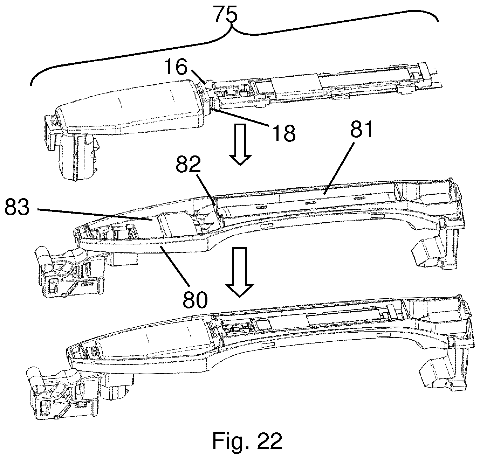

Mit der in der ausgegossenen Wanne 70 ausgehärteten Vergussmasse wird die Elektronikbaugruppe 75 zur weiteren Montage in dem Handgriff der Kraftfahrzeugtürgriffanordnung geschaffen. Die Montage der Baugruppe 75 in dem Handgriff 80 der Kraftfahrzeugtürgriffanordnung wird anhand der Fig. 22 erläutert.

Die vormontierte Baugruppe 75 mit der mit Vergussmasse ausgegossenen Wanne 70 und dem Stecker 30 wird in umgekehrter Orientierung wie in Fig. 22 erkennbar in den Handgriff 80 eingesetzt. Das Einsetzen erfolgt der Gestalt, dass die Antennenbaugruppe 50 in der Antennenkammer 81 in dem Handgriff 80 einliegt, während gleichzeitig die Wanne 70 in der Elektronikkammer 83 in dem Handgriff 80 einliegt.

Die Abdichtung der Antennenkammer 81 in dem Handgriff 80 erfolgt ebenfalls mittels der Dichtung 16. Die Wandung der Antennenkammer 81 weist eine Ausnehmung 82 auf, in der die Dichtung 16 mit der Nut 18 formschlüssig und kraftschlüssig einliegt. Die Dichtung 16 weist außenseitig die als Antennenkammernut dienende zweite Nut 18 auf. Die Antennenkammernut 18 ist ebenso wie die Wannennut 17 als umlaufende Nut außenseitig an der Dichtung 16 ausgebildet. Da die Orientierung bei Einsetzen der Dichtung 16 in die Wanne 70 gegenläufig zur Orientierung beim Einsetzen der Dichtung 16 in die Antennenkammer ist, sind auch die jeweils drei Außenseiten der Dichtung 16 überspannenden Nuten 17, 18 der Dichtung 16 gegenläufig angeordnet.

Die Wandung der Antennenkammer 81 liegt in der Nut 18 der Dichtung 16 formschlüssig ein. Gleichzeitig wird eine Klemmwirkung zwischen der Wandung der Antennenkammer 81 und der Dichtung 16 erzeugt. Zu diesem Zweck ist die Dichtung 16 wie oben erläutert aus einem als Dichtung geeigneten reversibel verformbaren Kunststoff ausgebildet. Die Antennenkammernut 18 der Dichtung 16 und die Ausnehmung 82 der Antennenkammer 81 sind dementsprechend aufeinander abgestimmt. Die Antennenkammernut 18 bildet damit gleichzeitig eine Positionierhilfe beim Einsetzen der Antennenbaugruppe 50 des Elektronikmoduls 60 in die Antennenkammer 81. Durch die Klemmwirkung der Dichtung 16 in der Ausnehmung 82 der Wandung der Antennenkammer 81 wird die Antennenbaugruppe 50 gleichzeitig gegen ein Aufschwimmen während des nachfolgend erläuterten Vergussprozesses gesichert und fixiert. Die Vergussmasse härtet nach dem Vergussprozess aus.

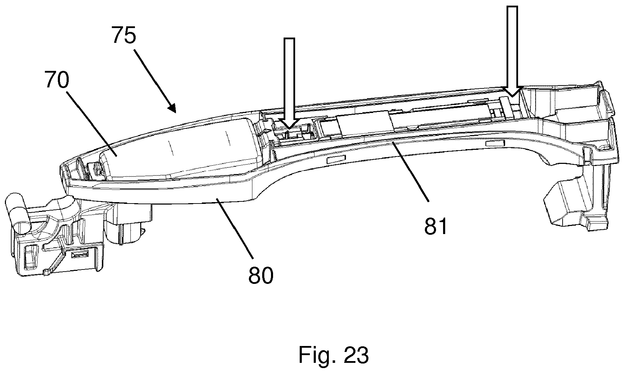

Nach dem Einsetzten der vormontierten Baugruppe in den Handgriff 80 erfolgt ein Vergießen der Antennenkammer 81 mit Vergussmasse, wie dies in Fig. 23 angedeutet ist. Da die Wanne 70 nunmehr umgekehrt orientiert ist wird deutlich, dass das Vergießen der Wanne 70 und der Antennenkammer 81 aus entgegengesetzten Richtungen erfolgt. Das Vergießen der Antennenkammer 81 mit Vergussmasse dient wiederum dem Schutz der Antennenbaugruppe 50 vor Feuchtigkeit und Vibrationen, da die Vergussmasse in der Antennenkammer 81 aushärtet. Die Vergussmasse bildet somit einen Schutz der Antennenbaugruppe 50 und der verlöteten Kontakte gegen Feuchtigkeit. Ferner dient die Vergussmasse als Dämpfer gegen Vibrationen.

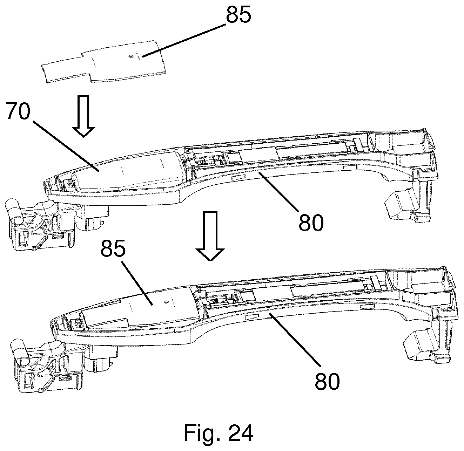

Anschließend wird auf die Wanne 70 ein flexibles Pad 85 aufgeklebt, wie dies in Fig. 24 erkennbar ist. Das Pad 85 dient der Abdichtung gegen Wasser und sichert die Funktion des kapazitiven Sensorblechs 41 für die Entriegelung. Wie in Fig. 24 erkennbar wird der größte Teil der Wanne 70 von dem Pad 85 abgedeckt. Möglich sind sowohl eine vollflächige Überdeckung der Wanne 70, als auch eine teilweise Überdeckung der Wanne 70 durch das Pad 85. Gleichzeitig dient das flexible Pad 85 der Dämpfung von Vibrationen.

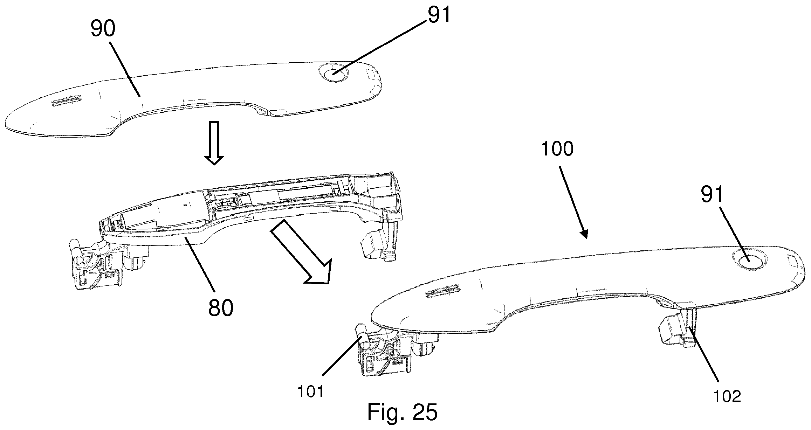

Abschließend erfolgt die Montage der außenseitigen Schale 90 an dem Handgriff 80, wie dies in Fig. 25 erkennbar ist. Ebenfalls in Fig. 25 erkennbar ist die Drehachse 101 um die herum die gesamte Anordnung gemäß Fig. 25 im Einbauzustand drehbar ist. Hierzu wird die komplette Handgriffanordnung 100 in einer entsprechenden Aufnahme in der Karosserie eines Kraftfahrzeuges montiert. Die in Fig. 25 dargestellte Handgriffanordnung 100 wird in ein entsprechendes Gehäuse oder direkt in die Kraftfahrzeugkarosserie eingebaut. Üblicherweise befindet sich die Drehachse 101 der Handgriffanordnung 100 in Fahrrichtung vorne, so dass am hinteren Ende der Handgriffanordnung 100 der Griffhaken 102 zur Außenseite des Kraftfahrzeuges herausgezogen werden kann und über eine entsprechende Kopplung auf das Türschloss einwirkt und bei entriegeltem Türschloss ein Öffnen der Kraftfahrzeugtür ermöglicht. Die Anordnung der Handgriffanordnung 100 gemäß Fig. 25 ist jedoch beliebig. Insbesondere kann diese auch umgekehrt an dem Kraftahrzeug oder auch senkrecht erfolgen.

Ferner weist die äußere Schale 90 eine Ausnehmung 91 auf, durch die ein Schlüssel in ein in der Fig. 25 nicht dargestelltes Schloss eingesteckt werden kann. In der Einbausituation befindet sich das Türschloss des Kraftfahrzeuges fluchtend hinter der Ausnehmung 91 der äußeren Schale 90.

### Bezugszeichenliste

- 10: Anschlussstück
- 11, 12, 13: Kontaktstifte
- 11', 12', 13': Kontaktstifte
- 14, 14': Positivkunststoffspritzform
- 15, 15': Vorstufe des Anschlussstücks
- 16, 16': Dichtung
- 17, 17': Wannennut
- 18, 18': Antennenkammernut
- 20, 20': Antennenträger
- 21: Ferromagnetischer Kern
- 22, 23: Nuten
- 24: Vorsprung
- 25: Ausnehmung
- 26: Wicklung
- 27: Sensorblech
- 28: Rasten
- 29: Kontakt
- 30: Stecker
- 31, 32: Kontaktstifte
- 33: Positivkunststoffspritzform
- 34: Vorprodukt des Steckers
- 35: Positivkunststoffspritzform
- 36: Hinterschneidung
- 40: Platine
- 41: Verriegelungsblech
- 50, 50': Antennenbaugruppe
- 60: Elektronikmodul
- 70: Wanne
- 71, 72: Positionierhilfen
- 73: Nase
- 75: Elektronikbaugruppe
- 80: Handgriff
- 81: Antennenkammer
- 82: Wandung
- 83: Elektronikkammer
- 85: Pad
- 90: Schale
- 91: Ausnehmung
- 100: Handgriffanordnung
- 101: Drehachse
- 102: Griffhaken

## Patentansprüche

1. Kraftfahrzeugtürgriffanordnung mit einem Handgriff (80), wobei der Handgriff (80) zumindest eine Antennenkammer (81) mit einer darin angeordneten Antenne mit einem ferromagnetischen Kern (21) und einer um den Kern (21) gewickelten Spule (26) aufweist, wobei die Antenne Anschlussbereiche zur Kopplung mit Kontaktstiften (11, 12) zur Herstellung von elektrischen Kontakten aufweist, wobei die Antennenkammer (81) zumindest eine Ausnehmung in einer Wandung (82) zur Durchführung elektrisch leitender Kontaktstifte (11, 12, 13) aufweist, **dadurch gekennzeichnet, dass** die Kraftfahrzeugtürgriffanordnung ein durch einmaliges oder wiederholtes Kunststoffumspritzen vorgefertigter elektrisch leitender Kontaktstifte (11, 12, 13) hergestelltes Anschlussstück (10) aufweist und das Anschlussstück (10) in der Ausnehmung der Wandung (82) der Antennenkammer (81) die Antennenkammer (81) abdichtend formschlüssig und/oder kraftschlüssig einliegt, wobei das Anschlussstück (10) außenseitig eine Antennenkammernut (18) aufweist, die mit der Ausnehmung der Wandung (82) der Antennenkammer (81) einen Formschluss bildet, und wobei das Anschlussstück (10) außenseitig eine Wannennut (17) aufweist, die mit einer Ausnehmung der Wandung einer Wanne (70) zur Aufnahme einer Elektronikbaugruppe einen Formschluss bildet, wobei die Antennenkammernut (18) und die Wannennut (17) jeweils drei Außenseiten des Anschlussstückes (10) überspannen und in der Orientierung um 180° gedreht zueinander angeordnet sind.

2. Kraftfahrzeugtürgriffanordnung nach Anspruch 1, wobei das Anschlussstück (10) durch wiederholtes Kunststoffumspritzen der vorgefertigten elektrisch leitenden Kontaktstifte (11, 12, 13) hergestellt ist wobei in dem letzten Kunststoffspritzvorgang ein eine flexible Dichtung (16) bildender Kunststoff verwendet wird.

3. Kraftfahrzeugtürgriffanordnung nach einem der vorherigen Ansprüche wobei der Handgriff (80) eine Wanne (70) aufweist, in der eine Elektronikbaugruppe mit einer Platine (40) einliegt, wobei die Wanne (70) zumindest eine Ausnehmung in einer Wandung zur Durchführung der vorgefertigten elektrisch leitenden Kontaktstifte (11, 12, 13) aufweist und wobei das Anschlussstück (10) in der Ausnehmung der Wandung der Wanne (70) die Wanne (70) abdichtend formschlüssig und/oder kraftschlüssig einliegt.

4. Kraftfahrzeugtürgriffanordnung nach einem der vorherigen Ansprüche wobei die Kraftfahrzeugtürgriffanordnung einen Antennenträger (20) aufweist und der ferromagnetische Kern (21) formschlüssig in dem Antennenträger (20) einliegt, insbesondere wobei der ferromagnetische Kern (21) in Richtung seiner Längserstreckung in eine nutenförmige oder schwalbenschwanzförmige Aufnahme des Antennenträgers (20) eingeschoben ist.

5. Kraftfahrzeugtürgriffanordnung nach einem der vorherigen Ansprüche wobei der ferromagnetische Kern (21) durch zwei Teile gebildet ist, insbesondere zwei in Richtung der Längserstreckung des Kerns (21) gleichlange Teile, die hintereinander in dem Antennenträger (20) einliegen.

6. Kraftfahrzeugtürgriffanordnung nach einem der vorherigen Ansprüche, wobei die Kraftfahrzeugtürgriffanordnung einen Antennenträger (20) aufweist, der in der Antennenkammer (81) angeordnet ist und der zumindest einen Biegebereich aufweist, wobei der Biegebereich durch eine Materialausnehmung (25) gebildet ist.

7. Kraftfahrzeugtürgriffanordnung nach einem der vorherigen Ansprüche, wobei die Kraftfahrzeugtürgriffanordnung einen Antennenträger (20) aufweist, der in der Antennenkammer (81) angeordnet ist und der dafür ausgelegt ist, zumindest ein Sensorblech (27) eines kapazitiven Näherungssensors aufzunehmen.

8. Kraftfahrzeugtürgriffanordnung nach einem der vorherigen Ansprüche, wobei die Kraftfahrzeugtürgriffanordnung einen Antennenträger (20) aufweist, der in der Antennenkammer (81) angeordnet ist und zumindest ein Sensorblech (27) eines kapazitiven Näherungssensors umfasst, das in dem Antennenträger (20) formschlüssig einliegt, insbesondere in Richtung seiner Längserstreckung in eine nutenförmige oder schwalbenschwanzförmige Aufnahme des Antennenträgers (20) eingeschoben ist, insbesondere gegenläufig zu einem in den Antennenträger (20) eingeschobenen ferromagnetischen Kern (21) in eine Aufnahme eingeschoben ist.

9. Kraftfahrzeugtürgriffanordnung nach einem der vorherigen Ansprüche, wobei die Kraftfahrzeugtürgriffanordnung einen Antennenträger (20) und zumindest ein Sensorblech (27) eines kapazitiven Näherungssensors aufweist, wobei in dem Antennenträger (20) das zumindest eine Sensorblech (27) formschlüssig einliegt und in Richtung seiner Längserstreckung in eine nutenförmige Aufnahme des Antennenträgers (20) eingeschoben ist, wobei das zumindest eine Sensorblech (27) und/oder der Antennenträger (20) eine Rastverbindung (28) aufweist, die dazu ausgelegt ist, dass das zumindest eine Sensorblech (27) in einer Vormontageposition in der Rastverbindung (28) lösbar verrastet, um die Montage eines Steckers (30) an dem Sensorblech (27) zu ermöglichen.

10. Kraftfahrzeugtürgriffanordnung nach einem der vorherigen Ansprüche, wobei die Kraftfahrzeugtürgriffanordnung einen Antennenträger (20) aufweist und die vorgefertigten elektrisch leitenden Kontaktstifte (11, 12, 13) mit Kunststoff umspritzt sind und ein Anschlussstück (10) bilden, wobei das Anschlussstück (10) und der Antennenträger (20) einstückig, insbesondere materialeinheitlich ausgebildet sind.

## Claims

1. Motor vehicle door handle arrangement with a handle (80), wherein the handle (80) has at least one antenna chamber (81) with an antenna arranged therein with a ferromagnetic core (21) and a coil (26) wound around the core (21), wherein the antenna has connection regions for coupling with contact pins (11, 12) to produce electrical contacts, wherein the antenna chamber (81) has at least one recess in a wall (82) for the passage of electroconductive contact pins (11, 12, 13), **characterised in that** the motor vehicle door handle arrangement has a connection piece (10) produced by single or repeated plastic overmoulding of pre-fabricated electroconductive contact pins (11, 12, 13), and the connection piece (10) is arranged in the recess of the wall (82) of the antenna chamber (81) in a form-fitting and/or force-fitting manner, sealing the antenna chamber (81), wherein the connection piece (10) has an antenna chamber groove (18) on the outer side, which groove forms a form-fit with the recess of the wall (82) of the antenna chamber (81), and wherein the connection piece (10) has a trough groove (17) on the outer side, which forms a form-fit with a recess of the wall of a trough (70) for receiving an electronic assembly, wherein the antenna chamber groove (18) and the trough groove (17) respectively span three outer sides of the connection piece (10) and are oriented rotated 180° relative to one another.

2. Motor vehicle door handle arrangement according to claim 1, wherein the connection piece (10) is produced by repeated plastic overmoulding of the pre-fabricated electroconductive contact pins (11, 12, 13),
wherein in the final plastic injection process a plastic is used which forms a flexible seal (16).

3. Motor vehicle door handle arrangement according to any of the preceding claims, wherein the handle (80) has a trough (70), into which an electronic assembly with a circuit board (40) is set, wherein the trough (70) has at least one recess in a wall for passing through the prefabricated electroconductive contact pins (11, 12, 13) and, wherein the connection piece (10) is set in the recess of the wall of the trough (70) in a form-fitting and/or force-fitting manner, sealing the tough (70).

4. Motor vehicle door handle arrangement according to any of the preceding claims, wherein the motor vehicle door handle arrangement has an antenna support (20) and the ferromagnetic core (21) is set in a form-fitting manner in the antenna support (20), in particular wherein the ferromagnetic core (21) is inserted in the direction of its longitudinal extension into a groove-shaped or dovetail-shaped mount of the antenna support (20).

5. Motor vehicle door handle arrangement according to any of the preceding claims, wherein the ferromagnetic core (21) is formed by two parts, in particular two parts of equal length in the direction of the longitudinal extension of the core (21), which are arranged one behind the other in the antenna support (20).

6. Motor vehicle door handle arrangement according to any of the preceding claims, wherein the motor vehicle door hand arrangement has an antenna support (20) which is arranged in the antenna chamber (81), and which has at least one bending region, wherein the bending region is formed by a material recess (25).

7. Motor vehicle door handle arrangement according to any of the preceding claims, wherein the motor vehicle door arrangement has an antenna support (20) which is arranged in the antenna chamber (81), and which is configured to accommodate at least one sensor plate (27) of a capacitive proximity sensor.

8. Motor vehicle door handle arrangement according to any of the preceding claims, wherein the motor vehicle door handle arrangement has an antenna support (20) which is arranged in the antenna chamber (81) and comprises at least one sensor plate (27) of a capacitive proximity sensor which is set in a form-fitting manner in the antenna support (20), in particular is inserted into a groove-shaped or dovetail-shaped mount of the antenna support (20) in the direction of its longitudinal extension, in particular is inserted into a mount in opposite direction to a ferromagnetic core (21) inserted into the antenna support (20).

9. Motor vehicle door handle arrangement according to any of the preceding claims, wherein the motor vehicle door handle arrangement has an antenna support (20) and at least one sensor plate (27) of a capacitive proximity sensor, wherein the at least one sensor plate (27) is set in a form-fitting manner in the antenna support (20) and is inserted into a groove-shaped mount of the antenna support (20) in the direction of its longitudinal extension, wherein the at least one sensor plate (27) and/or the antenna support (20) has a latching connection (28), which is configured such that the at least one sensor plate (27) latches releasably in a pre-mounting position in the latching connection (28) to enable the mounting of a plug (30) on the sensor plate (27).

10. Motor vehicle door handle arrangement according to any of the preceding claims, wherein the motor vehicle door handle arrangement has an antenna support (20) and the prefabricated electroconductive contact pins (11, 12, 13) are overmoulded with plastic and form a connection piece (10), wherein the connection piece (10) and the antenna support (20) are formed in one piece, in particular from the same material.

## Revendications

1. Dispositif de poignée de porte de véhicule automobile avec une poignée (80), selon lequel la poignée (80) présente au moins une chambre d'antenne (81) avec une antenne disposée à l'intérieur de celle-ci avec un noyau ferromagnétique (21) et une bobine (26) enroulée autour du noyau (21), selon lequel l'antenne présente des zones de raccordement à la prise avec des broches de contact (11, 12) pour fabriquer des contacts électriques, selon lequel la chambre d'antenne (81) présente au moins un évidement dans une paroi (82) pour la traversée de broches de contact électriquement conductrices (11, 12, 13), **caractérisé en ce que** le dispositif de poignée de porte de véhicule automobile présente une pièce de raccordement (10) fabriquée par un surmoulage avec une matière plastique de manière unique ou répétée de broches de contact (11, 12, 13) électriquement conductrices préfabriquées, et la pièce de raccordement (10) est incluse dans l'évidement de la paroi (82) de la chambre d'antenne (81) par complémentarité de formes et/ou à force en étanchant la chambre d'antenne (81), selon lequel la pièce de raccordement (10) présente à l'extérieur une rainure de chambre d'antenne (18) qui forme une complémentarité de forme avec l'évidement de la paroi (82) de la chambre d'antenne (81), et selon lequel la pièce de raccordement (10) présente à l'extérieur une rainure en cuvette (17) qui forme une complémentarité de forme avec un évidement de la paroi d'une cuvette (70) pour loger un module électronique, selon lequel la rainure de chambre d'antenne (18) et la rainure en cuvette (17) recouvrent respectivement trois faces externes de la pièce de raccordement (10) et sont disposées, en ce qui concerne leur orientation, tournées de 180° l'une par rapport à l'autre.

2. Dispositif de poignée de porte de véhicule automobile selon la revendication 1, selon lequel la pièce de raccordement (10) est fabriquée par un surmoulage en matière plastique de manière répétée des broches de contact (11, 12, 13) électriquement conductrices préfabriquées, selon lequel, lors du dernier processus de surmoulage en matière plastique, un plastique formant un joint flexible (16) est utilisé.

3. Dispositif de poignée de porte de véhicule automobile selon l'une quelconque des revendications précédentes, selon lequel la poignée (80) présente une cuvette (70) dans laquelle est inclus un module électronique avec une platine (40), selon lequel la cuvette (70) présente au moins un évidement dans une paroi pour la traversée des broches de contact (11, 12, 13) électriquement conductrices préfabriquées et selon lequel la pièce de raccordement (10) est incluse dans l'évidement de la paroi de la cuvette (70) par complémentarité de formes et/ou à force en étanchant la cuvette (70).

4. Dispositif de poignée de porte de véhicule automobile selon l'une quelconque des revendications précédentes, selon lequel le dispositif de poignée de porte de véhicule automobile présente un support d'antenne (20), et le noyau ferromagnétique (21) est inclus dans le support d'antenne (20) par complémentarité de formes, en particulier selon lequel le noyau ferromagnétique (21) est inséré dans la direction de son extension longitudinale dans un logement en forme de rainure ou en forme de queue d'aronde du support d'antenne (20).

5. Dispositif de poignée de porte de véhicule automobile selon l'une quelconque des revendications précédentes, selon lequel le noyau ferromagnétique (21) est formé de deux parties, en particulier de deux parties de même longueur dans la direction de l'extension longitudinale du noyau (21), qui sont incluses l'une derrière l'autre dans le support d'antenne (20).

6. Dispositif de poignée de porte de véhicule automobile selon l'une quelconque des revendications précédentes, selon lequel le dispositif de poignée de porte de véhicule automobile présente un support d'antenne (20) qui est disposé dans la chambre d'antenne (81) et qui présente au moins une zone de cintrage, selon lequel la zone de cintrage est formée par un évidement de matériau (25).

7. Dispositif de poignée de porte de véhicule automobile selon l'une quelconque des revendications précédentes, selon lequel le dispositif de poignée de porte de véhicule automobile présente un support d'antenne (20) qui est disposé dans la chambre d'antenne (81) et qui est conçu pour recevoir au moins une plaque métallique de détecteur (27) d'un détecteur de proximité capacitif.

8. Dispositif de poignée de porte de véhicule automobile selon l'une quelconque des revendications précédentes, selon lequel le dispositif de poignée de porte de véhicule automobile présente un support d'antenne (20) qui est disposé dans la chambre d'antenne (81) et comprend au moins une plaque métallique de détecteur (27) d'un détecteur de proximité capacitif, qui est incluse dans le support d'antenne (20) par complémentarité de formes, en particulier est insérée, dans la direction de son extension longitudinale, dans un logement en forme de rainure ou en forme de queue d'aronde du support d'antenne (20), en particulier est insérée dans un logement, opposée à un noyau ferromagnétique (21) inséré dans le support d'antenne (20).

9. Dispositif de poignée de porte de véhicule automobile selon l'une quelconque des revendications précédentes, selon lequel le dispositif de poignée de porte de véhicule automobile présente un support d'antenne (20) et au moins une plaque métallique de détecteur (27) d'un détecteur de proximité capacitif, selon lequel la au moins une plaque métallique de détecteur (27) est incluse dans le support d'antenne (20) par complémentarité de formes et est insérée dans la direction de son extension longitudinale dans un logement en forme de rainure du support d'antenne (20), selon lequel la au moins une plaque métallique de détecteur (27) et/ou le support d'antenne (20) présente une liaison par encliquetage (28) qui est conçue pour que la au moins une plaque métallique de détecteur (27) s'encliquette de manière amovible, dans une position de prémontage, dans la liaison par encliquetage (28), pour permettre le montage d'une fiche (30) sur la plaque métallique de détecteur (27).

10. Dispositif de poignée de porte de véhicule automobile selon l'une quelconque des revendications précédentes, selon lequel le dispositif de poignée de porte de véhicule automobile présente un support d'antenne (20), et des broches de contact (11, 12, 13) électriquement conductrices préfabriquées sont surmoulées avec une matière plastique et forment une pièce de raccordement (10), selon lequel la pièce de raccordement (10) et le support d'antenne (20) sont conçus d'un seul tenant, en particulier dans le même matériau.
